# EUROPÄISCHE PATENTSCHRIFT

(11) **EP 3 439 925 B1**
(45) Veröffentlichungstag und Bekanntmachung des Hinweises auf die Patenterteilung: **18.12.2019**
(21) Anmeldenummer: 17716498.5
(22) Anmeldetag: 05.04.2017
(51) Int. Cl.: B60R 22/185

(54) **SCHLOSSZUNGE MIT EINEM EINEN UMLENKBEREICH AUFWEISENDEN KLEMMELEMENT**
BELT TONGUE COMPRISING A CLAMPING ELEMENT THAT HAS A GUIDE SECTION
LANGUETTE DE VERROUILLAGE COMPRENANT UN ÉLÉMENT DE SERRAGE COMPORTANT UNE PARTIE DE GUIDAGE

(30) Priorität: 08.04.2016 DE 102016106440
(43) Veröffentlichungstag der Anmeldung: 13.02.2019
(73) Patentinhaber: Autoliv Development AB, 447 83 Vårgårda (SE)
(72) Erfinder: KRAMBECK, Inga, 25336 Elmshorn (DE); CORD, Hans-Jörg, 22848 Norderstedt (DE); HERMANN, Michel, 25421 Pinneberg (DE); GRIKSCHAT, Martin, 25524 Breitenburg (DE)
(74) Vertreter: Feucker, Max Martin
(86) Internationale Anmeldenummer: PCT/EP2017/058093
(87) Internationale Veröffentlichungsnummer: WO 2017/174650

(56) Entgegenhaltungen:
- WO-A1-2016/050763
- DE-A1-102014 007 125
- DE-A1-102014 106 097
- US-A- 5 870 816

## Beschreibung

Die vorliegende Erfindung betrifft eine Schlosszunge mit einem sich in eine Einsteckrichtung erstreckenden Zungenkörper, in dem ein Gurtschlitz zur Durchführung eines Gurtbands ausgebildet ist, und einem beweglich in dem Zungenkörper angeordneten Umlenkelement, wobei das Gurtband in einer unbelasteten Durchlaufstellung des Umlenkelements durch den Gurtschlitz beweglich ist und in einer durch eine in das Gurtband eingeleitete Zugkraft herbeigeführten Belastungsstellung des Umlenkelements mittels des Umlenkelements in seiner Beweglichkeit zumindest gehemmt ist, wobei das Umlenkelement von der Durchlaufstellung in die Belastungsstellung mit einem Verengungsabschnitt entlang einer Anlagefläche des Zungenkörpers bewegbar ist, so dass das Gurtband in der Belastungsstellung mit einem Gurtbandabschnitt sowohl mit der Anlagefläche des Zungenkörpers als auch mit dem Verengungsabschnitt des Umlenkelements flächig in Anlage ist.

Aus DE 198 22 473 A1 ist eine Schlosszunge bekannt, bei der ein als Klemmelement ausgebildetes Umlenkelement drehbar um eine Achse angeordnet ist. Überschreitet die Gurtkraft einen vorbestimmten Wert, schwenkt das Klemmelement um seine Achse und klemmt das Gurtband mit einer Klemmkante gegen einen Klemmbacken des Zungenkörpers. Es hat sich nun herausgestellt, dass die bei einem Unfall auftretenden Kräfte so groß sind, dass die Schlosszunge verformt wird, wobei die Klemmkante des Klemmelements das Gurtband nicht sicher gegen den Klemmbacken klemmt.

Aus EP 1 983 857 B1 ist eine Schlosszunge mit den eingangs genannten Merkmalen bekannt, bei der das Umlenkelement aus der Durchlaufstellung in die Belastungsstellung entlang einer Anlagefläche des Zungenkörpers bewegt wird, so dass für das Gurtband eine scherenartige Schikane ausgebildet wird, durch die das Gurtband verläuft und in der das Gurtband mit seinen Seiten flächig in Anlage mit der Anlagefläche des Zungenkörpers bzw. mit dem Verengungsabschnitt des Umlenkelements ist. Trotz der bei einem Unfall auftretenden Verformungen kann bei dieser Schlosszunge eine ausreichende Hemmung der Beweglichkeit des Gurtbandes durch die Schlosszunge erreicht werden, so dass der Beckenabschnitt und der Oberkörperabschnitt des Gurtbandes im Falle eines Unfalles entkoppelt sind. Aufgrund der Lagerung des Klemmelements mit seiner konvexen Außenfläche am Zungenkörper weist der Zungenkörper aber eine relativ große und unsymmetrische Erstreckung quer zur Einsteckrichtung auf. Eine weitere Schlosszunge mit den Merkmalen des Oberbegriffs des Anspruchs 1 ist aus US 5 870 816 A bekannt.

Aufgabe der vorliegenden Erfindung ist es daher, die mit Bezug zum Stand der Technik geschilderten Nachteile zumindest teilweise zu überwinden und insbesondere eine Schlosszunge anzugeben, die kompakt aufgebaut ist und die im Falle eines Unfalles eine sichere Entkopplung des Oberkörperabschnitts vom Beckenabschnitt des Gurtbandes ermöglicht. Weitere Aufgaben liegen darin, Klappergeräusche zu reduzieren und eine Selbsthemmung des Umlenkelements in der Belastungsstellung zu ermöglichen.

Gelöst wird die Aufgabe durch eine Schlosszunge mit den Merkmalen des unabhängigen Anspruchs. Vorteilhafte Weiterbildungen der Schlosszunge sind in den abhängigen Ansprüchen und in der Beschreibung angegeben, wobei einzelne Merkmale der vorteilhaften Weiterbildungen in technologisch sinnvoller Weise beliebig miteinander kombinierbar sind.

Gelöst wird die Aufgabe insbesondere durch eine Schlosszunge mit den eingangs genannten Merkmalen, bei der zumindest in der Belastungsstellung der Zungenkörper mit einem die Anlagefläche aufweisenden Bereich durch zumindest einen Abschnitt oder Bereich des Umlenkelements hindurchgreift.

Aufgrund des Durchgreifens des Zungenkörpers durch das Umlenkelement kann der durch den Verengungsabschnitt und der Anlagefläche ausgebildete Hemm- oder Klemmbereich für den Gurtbandabschnitt unmittelbar in oder benachbart zu dem Gurtschlitz ausgebildet sein. Somit reicht es aus, dass in dem Zungenkörper nur genau ein Gurtschlitz ausgebildet ist. Zudem kann der Gurtschlitz in seiner Erstreckung quer zur Einsteckrichtung schmaler ausgeführt werden.

Der Zungenkörper ist also insbesondere so geformt, dass er mit einem die Anlagefläche aufweisenden Bereich beispielsweise in Form eines vorspringenden Fortsatzes in Richtung des Gurtschlitzes hervorsteht. Das Umlenkelement ist bevorzugt so geformt, dass es zumindest teilweise in Gurtbandverlaufsrichtung sowohl vor als auch hinter dem die Anlagefläche aufweisenden Bereich des Zungenkörpers ausgebildet ist. Das Umlenkelement muss den die Anlagefläche aufweisenden Bereich des Zungenkörpers allerdings nicht vollständig umgeben. Es ist ausreichend, wenn einige Abschnitte des Umlenkelementes vor und einige Abschnitte des Umlenkelements hinter dem die Anlagefläche aufweisenden Bereich des Zungenkörpers angeordnet sind.

In der Durchlaufstellung kann das Umlenkelement so angeordnet sein, dass das Gurtband nicht in Kontakt mit der Anlagefläche des Zungenkörpers kommen kann. Insbesondere kann das Umlenkelement mittels eines Federelements in die Durchlaufstellung vorgespannt sein.

Wird nun beispielsweise im Falle eines Unfalles eine Zugkraft in das Gurtband eingeleitet, so wird das Umlenkelement von der Durchlaufstellung in die Belastungsstellung bewegt. Insbesondere kann das Umlenkelement hierzu schwenkbar um eine Schwenkachse an dem Zungenkörper gelagert sein. Die Schwenkachse kann gleichzeitig eine Rückstellkraft bereitstellen. In der Belastungsstellung ist der Verengungsabschnitt des Umlenkelementes insbesondere so zu der Anlagefläche des Zungenkörpers positioniert, dass das Gurtband durch einen Spalt zwischen der Anlagefläche und dem Verengungsabschnitt geführt ist und insbesondere in einem Längsschnitt einen S-förmigen Verlauf einnimmt.

Der sich in Gurtbandverlaufsrichtung erstreckende Spalt weist insbesondere an seiner schmalsten Stelle eine Größe auf, die geringer ist als eine Dicke des Gurtbandes. Das Umlenkelement wird mit seinem Verengungsabschnitt also nicht unmittelbar auf die Anlagefläche zu bewegt, sondern vielmehr entlang insbesondere parallel zu der Anlagefläche des Zungenkörpers bewegt. Das Gurtband wird somit nicht von dem Umlenkelement auf die Anlagefläche des Zungenkörpers aufgedrückt. Vielmehr wird durch den Spalt zwischen der Anlagefläche und dem Verengungsabschnitt eine Verengung für das Gurtband ausgebildet.

Der Zungenkörper und das Umlenkelement sind also so ausgebildet, dass immer ein eine Verengung für das Gurtband ausbildender Spalt zwischen dem Verengungsabschnitt und der Anlagefläche vorliegt. Eine Hemmung der Beweglichkeit des Gurtbandes erfolgt unter anderem aufgrund der doppelten Umlenkung am Anfang und am Ende des Gurtbandabschnitts und aufgrund des die Verengung ausbildenden schmalen Spaltes. Die Anlagefläche des Zungenkörpers und der Verengungsabschnitt des Umlenkelementes können insbesondere so geformt sein, dass sich der in der Belastungsstellung zwischen ihnen ausbildende Spalt in Gurtbandverlaufsrichtung verjüngt. Der in der Belastungsstellung vorliegende Spalt hat in Gurtbandverlaufsrichtung insbesondere eine Ausdehnung von mindestens 5 mm (Millimeter), bevorzugt mindestens 8 mm oder sogar von mindestens 10 mm. Die Anlagefläche und der Verengungsabschnitt verlaufen in der Belastungsstellung in diesem Bereich insbesondere parallel zueinander.

In einer Ausführungsform weist das Umlenkelement einen Schenkel auf, der von dem Gurtband aus der Durchlaufstellung in die Belastungsstellung unmittelbar, also in direkter Anlage ausgelenkt wird, wobei das Umlenkelement einen Bügel aufweist, der das Gurtband übergreift und den Verengungsabschnitt ausbildet. Das Gurtband ist insbesondere zwischen dem Bügel und dem Schenkel hindurchgeführt. Insbesondere ist der den Verengungsabschnitt ausbildende Bügel in der Durchlaufstellung in dem Gurtschlitz angeordnet, wobei eine relativ große Öffnung für das Gurtband zwischen dem Bügel und dem die Anlagefläche aufweisenden Bereich des Zungenkörpers ausgebildet ist. Insofern ist das Gurtband leichtgängig durch den Spalt hindurchführbar. Wird nun eine Zugkraft in das Gurtband eingeleitet, so greift diese an dem Schenkel des Umlenkelementes an, so dass das Umlenkelement insbesondere um die Schwenkachse bewegt wird. Während des Verschwenkens wird der Bügel mit dem Verengungsabschnitt so verschwenkt, dass ein relativ enger Spalt zwischen dem Verengungsabschnitt des Umlenkelements und der Anlagefläche des Zungenkörpers ausgebildet wird. Der Schenkel wird insbesondere in eine Ausnehmung in dem Zungenkörper beim Erreichen der Belastungsstellung eingeschwenkt.

In einer bevorzugten Ausführungsform kann vorgesehen sein, dass das Gurtband in dem Gurtbandabschnitt in der Längserstreckungsrichtung des Gurtbandes durch die Anlagefläche und den Verengungsabschnitt umgelenkt wird. Das Gurtband weist also in dem Gurtbandabschnitt, in dem das Gurtband flächig an der Anlagefläche und dem Verengungsabschnitt anliegt eine Umlenkstelle auf. Somit sind in der Belastungsstellung unmittelbar hintereinander zwei Schikanen für das Gurtband ausgebildet.

Bevorzugt ist das Umlenkelement und/oder der Zungenkörper so geformt, dass in der Belastungsstellung mindestens drei Umlenkstellen für das Gurtband von der Schlosszunge ausgebildet werden, wobei in der Belastungsstellung aufgrund des von der Durchlaufstellung in die Belastungsstellung bewegten Umlenkelements mehr Umlenkstellen ausgebildet sind als für das in der Durchlaufstellung schlaufenförmig umgelenkte Gurtband. Neben den Umlenkstellen im Bereich des Verengungsabschnitts des Umlenkelements und der Anlagefläche des Zungenkörpers werden also weitere Umlenkstellen für das Gurtband von dem Zungenkörper oder dem Umlenkelement ausgebildet. Die Umlenkstellen werden insbesondere durch Endbereiche von Schenkeln des Umlenkelementes gebildet. Es ist nun vorgesehen, dass in der Belastungsstellung mehr Umlenkstellen ausgebildet werden als in der Durchlaufsstellung, so dass die die Bewegung des Gurtbandes hemmenden Kräfte vergrößert sind.

Der Bügel erstreckt sich also quer zu der Gurtbandverlaufsrichtung von der einen Seite des Umlenkelements zu der gegenüberliegenden Seite, so dass der Bügel beim Verschwenken des Umlenkelements auch verschwenkt wird. Der Bügel überspannt also das Gurtband. Insbesondere ist der Bügel so angeordnet, dass der Bügel das Gurtband in der Belastungsstellung innerhalb des Gurtschlitzes umlenkt und dem Gurtband in dem Gurtschlitz eine gegenüber dem restlichen Verlauf entgegengesetzte Krümmungsrichtung vorgibt.

Bevorzugt ist das Umlenkelement schwenkbar an dem Zungenkörper gelagert. Insbesondere liegt das Gurtband so an dem Umlenkelement an, dass das Gurtband während der Krafteinleitung das Umlenkelement unmittelbar so mit Kraft beaufschlagt, dass es verschwenkt wird.

Bevorzugt ist das Umlenkelement in einem Querschnitt einer U-Form angenähert, wobei der eine Schenkel oder den Schenkel bildende Bereiche des Umlenkelementes in der Durchlaufstellung in der Ausnehmung angeordnet ist/sind und der andere, bezüglich der Schwenkachse gegenüberliegende Schenkel erst in der Belastungsstellung in einer weiteren Ausnehmung in dem Zungenkörper angeordnet ist. Die Schwenkachse ist insbesondere in einem die Schenkel verbindenden Bereich des Umlenkelements ausgebildet.

In einer Ausführungsform der Schlosszunge ist vorgesehen, dass das Umlenkelement und/oder der Zungenkörper so geformt und das Umlenkelement in der Belastungsstellung so ausgelenkt ist, dass das Gurtband zwischen zwei Umlenkstellen beabstandet von der Schlosszunge verläuft oder im Vergleich zu der Haftreibung der Umlenkstelle mit geringerer Haftreibung an der Schlosszunge anliegt.

Das Gurtband liegt insbesondere in der Belastungsstellung an vier, bevorzugt mit einem reibungserhöhenden Material ausgebildeten Umlenkstellen an, an denen das Gurtband insbesondere einen geringeren Krümmungsradius aufweist als vor, nach und zwischen den Umlenkstellen. Insbesondere verläuft das Gurtband zwischen den Umlenkstellen geradlinig. Das Gurtband liegt also in Gurtbandverlaufsrichtung an mindestens drei hintereinander angeordneten Stellen mit einer erhöhten Haftreibung an der Schlosszunge an. Es hat sich gezeigt, dass auch aufgrund dieses Wechsels zwischen hoher Haftreibung und geringer oder gar keiner Haftreibung bei gleichzeitig geringerem Krümmungsradius des Gurtbands an den Umlenkstellen eine sichere Blockierstellung gegeben ist. In der Durchlaufstellung ist hingegen zumindest eine der Umlenkstellen mit einem reibungserhöhenden Material nicht in Anlage mit dem Gurtband.

Insbesondere ist das Umlenkelement mittels eines Federelements in die Durchlaufstellung vorgespannt. Bevorzugt kann ein die Schwenkachse ausbildendes Lagerelement als Torsionsfeder ausgebildet sein, so dass für das Federelement kein zusätzliches Bauteil benötigt wird.

Die Umlenkstellen können entweder von dem Umlenkelement oder von dem Zungenkörper selbst gebildet sein.

Der Zungenkörper weist insbesondere eine Schlosszungenplatine und eine die Schlosszungenplatine zumindest teilweise umgebende Umspritzung aus einem Kunststoff auf. An der Umspritzung kann ein die Reibung der Umspritzung weiter erhöhendes Material ausgebildet sein.

Insbesondere sind mindestens die im Gurtbandverlauf erste Umlenkstelle und letzte Umlenkstelle von dem Umlenkelement ausgebildet, wobei die weiteren mindestens zwei Umlenkstellen im Gurtbandverlauf zwischen der ersten und der letzten Umlenkstelle ausgebildet sind. Soweit die mittleren Umlenkstellen zwischen der ersten Umlenkstelle und der letzten Umlenkstelle ebenfalls von dem Umlenkelement ausgebildet sein können, ist bevorzugt, dass eine mittlere Umlenkstelle von dem die Anlagefläche aufweisenden Bereich des Zungenkörpers und eine weitere mittlere Umlenkstelle von dem in der Belastungsstellung der Anlagefläche gegenüberliegenden Verengungsabschnitt des Umlenkelementes gebildet wird.

Insbesondere ist die Schlosszunge im Bereich der von ihr ausgebildeten Umlenkstellen aus einem Material geformt, das einen relativ hohen Reibungskoeffizienten aufweist.

In einer bevorzugten Ausführungsform kann vorgesehen sein, dass das Umlenkelement einen zweiten Schenkel mit einem reibungserhöhenden Material an einem Endbereich des zweiten Schenkels ausbildet, wobei der Endbereich des zweiten Schenkels in der Durchlaufstellung in mindestens einer Ausnehmung des Zungenkörpers angeordnet ist und in der Belastungsstellung aus der Ausnehmung des Zungenkörpers herausbewegt ist, so dass der Endbereich des zweiten Schenkels mit dem reibungserhöhenden Material in Anlage mit dem Gurtband ist und eine Umlenkstelle für das Gurtband ausbildet.

In der Durchlaufstellung ist das Umlenkelement also so an dem Zungenkörper gelagert, dass der Bereich des Umlenkelements mit dem reibungserhöhenden Material in der Ausnehmung angeordnet ist und nicht mit dem Gurtband in Kontakt kommt. Wird eine Zugkraft in das Gurtband eingeleitet, so wird das Umlenkelement aufgrund der insbesondere unmittelbar auf das Umlenkelement wirkenden Zugkraft so bewegt, dass das reibungserhöhende Material des Umlenkelements aus der Ausnehmung des Zungenkörpers herausbewegt, insbesondere herausgeschwenkt wird. In der ausgelenkten Stellung ist das reibungserhöhende Material mit dem Gurtband in Anlage, wodurch das Gurtband an einer Relativbewegung zu dem reibungserhöhenden Material gehindert ist. Zusätzlich wird durch den Endbereich in der ausgelenkten Stellung eine Umlenkstelle für das Gurtband ausgebildet, an der das Gurtband umgelenkt wird.

Das Gurtband verläuft also vor und nach der Umlenkstelle in seiner Längserstreckung in unterschiedliche Richtungen. Insbesondere verläuft das Gurtband vor und nach der Umlenkstelle zumindest abschnittsweise geradlinig. Durch die Anlage des Gurtbands an der Umlenkstelle ist die Haftreibung weiter erhöht.

Zur Verhinderung von Klappergeräuschen wird eine eigenständige Erfindung unabhängig von der zuvor beschriebenen Lösung darin gesehen, dass das Umlenkelement mittels wenigstens eines Federelements in die Durchlaufstellung vorgespannt ist. Durch die Vorspannung wird verhindert, dass das Umlenkelement unbeabsichtigte Bewegungen ausführt, wodurch Klappergeräusche reduziert oder eliminiert werden können. Das Federelement kann als separates Bauteil an der Schlosszunge ausgebildet sein, sodass dieses nur die Aufgabe der Vorspannung erfüllt. Alternativ kann das Federelement in einem anderen Bauteil der Schlosszunge integriert sein. Hierzu wurde bereits die die Schwenkachse ausbildende Torsionsfeder angegeben. Bevorzugt ist allerdings, dass das Federelement unabhängig von der die Schwenkachse ausbildenden Torsionsfeder gebildet ist.

In diesem Zusammenhang ist insbesondere bevorzugt, dass das wenigstens eine Federelement durch zumindest ein einteilig mit dem Zungenkörper ausgebildetes Ärmchen gebildet ist. Das mindestens eine Ärmchen ist bevorzugt ein Bestandteil der aus Kunststoff bestehenden Umspritzung einer metallischen Platine, die gemeinsam den Zungenkörper ausbilden.

Das mindestens eine Ärmchen erstreckt sich insbesondere von einer Seite des Zungenkörpers zu einer gegenüberliegenden Seite insbesondere benachbart zu oder innerhalb des Gurtschlitzes durch den Zungenkörper hindurch. Bevorzugt ist das mindestens eine Ärmchen zudem in Anlage mit dem ersten Schenkel des Umlenkelements. Neben der Bereitstellung der in Richtung der Durchlaufstellung wirkenden Vorspannung bedingt das wenigstens eine Federelement zudem eine Erhöhung der Aktivierungskraft des Umlenkelements.

Zur Ermöglichung einer Selbsthemmung des Umlenkelements in der Belastungsstellung wird eine eigenständige Erfindung unabhängig von den zuvor beschriebenen Lösungen insbesondere darin gesehen, dass an dem Umlenkelement nach außen auskragende Anschlagselemente ausgebildet sind, die in der Belastungsstellung in Anlage mit Gegenanschlagsflächen an dem Zungenkörper sind, wobei die Gegenanschlagsflächen seitlich von dem Gurtschlitz angeordnet sind.

Die Gegenanschlagsflächen sind insbesondere in der Umspritzung des Zungenkörpers ausgebildet, wobei die so gebildete Vertiefung bevorzugt so geformt ist, dass nach der Krafteinleitung in das Umlenkelement das Anschlagselement in der Vertiefung verklemmt wird.

Bevorzug ist zudem, dass das Umlenkelement einen ersten Schenkel aufweist, der von dem Gurtband aus der Durchlaufstellung in die Belastungsstellung unmittelbar ausgelenkt wird, wobei die Anschlagselemente zumindest in der Durchlaufstellung auf einer dem ersten Schenkel abgewandten Seite des Zungenkörpers angeordnet sind. In der Belastungsstellung wird die Kraft über das Gurtband hauptsächlich in den ersten Schenkel eingeleitet, wobei die Kraftübertragung von dem Anschlagselement auf die Gegenanschlagsfläche in den Zungenkörper auf einer dieser Einleitstelle gegenüberliegenden Seite erfolgt. Insbesondere ist somit zwischen der Kontaktstelle von Gurtband und erstem Schenkel und der Kontaktfläche von Anschlagselement und Anschlagsfläche die Platine des Zungenkörpers angeordnet, sodass eine günstige Krafteinleitung erfolgt.

Die Erfindung sowie das technische Umfeld werden im Folgenden anhand der Figuren beispielhaft erläutert. Es zeigen schematisch
- Fig. 1:: eine teilweise Explosionsansicht einer ersten Ausführungsform einer Schlosszunge,
- Fig. 2:: eine teilweise Explosionsansicht einer zweiten Ausführungsform einer Schlosszunge,
- Fig. 3:: einen Längsschnitt durch die erste Ausführungsform der Schlosszunge in der Durchlaufstellung,
- Fig. 4:: den Längsschnitt durch die erste Ausführungsform der Schlosszunge in der Belastungsstellung,
- Fig. 5:: einen Längsschnitt durch die zweite Ausführungsform der Schlosszunge in der Durchlaufstellung,
- Fig. 6:: den Längsschnitt durch die zweite Ausführungsform der Schlosszunge in der Belastungsstellung,
- Fig. 7:: einen Längsschnitt durch eine dritte Ausführungsform der Schlosszunge in der Durchlaufstellung,
- Fig. 8:: den Längsschnitt durch die dritte Ausführungsform der Schlosszunge in der Belastungsstellung,
- Fig. 9:: eine Frontansicht einer vierten Ausführungsform der Schlosszunge,
- Fig. 10:: einen Längsschnitt durch die vierte Ausführungsform der Schlosszunge im Bereich eines Federelements in der Durchlaufstellung,
- Fig. 11:: den Längsschnitt gemäß Figur 10 in der Belastungsstellung,
- Fig. 12:: eine Perspektivansicht des Umlenkelements der vierten Ausführungsform,
- Fig. 13:: einen Längsschnitt durch die vierte Ausführungsform der Schlosszunge im Bereich eines Anschlagselements in der Durchlaufstellung und
- Fig. 14:: den Längsschnitt durch die vierte Ausführungsform gemäß Figur 13 in der Belastungsstellung.

Die in den Figuren dargestellten Schlosszungen 1 umfassen jeweils einen Zungenkörper 3, der sich in einer Einsteckrichtung 2 erstreckt. In dem Zungenkörper 3 ist ein Gurtschlitz 4 ausgebildet, durch den ein Gurtband 5 geführt ist. Hin zu dem Gurtschlitz 4 steht ein Bereich des Zungenkörpers 3 hervor, an dem eine Anlagefläche 19 ausgebildet ist.

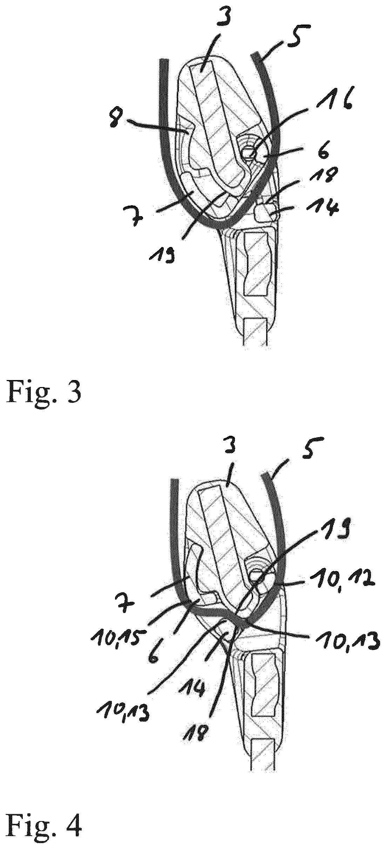

An dem Zungenkörper 3 ist ein Umlenkelement 6 schwenkbar gelagert. Das Umlenkelement 6 weist einen ersten Schenkel 7 und einen Bügel 14 auf, an dem ein Verengungsabschnitt 18 ausgebildet ist. In den in Fig. 3, 5 und 7 dargestellten Durchlaufstellungen ist das Gurtband 5 durch den Gurtschlitz 4 beweglich, da der Abstand zwischen Bügel 14 und Zungenkörper 3 ausreichend groß ist.

Wird nun eine Zugkraft in das Gurtband 5 eingeleitet, so wird diese Zugkraft unmittelbar auf den ersten Schenkel 7 übertragen und das Umlenkelement 6 wird um eine Achse 16 verschwenkt. Hierbei wird der Bügel 14 entlang der Anlagefläche 19 des Zungenkörpers 3 bewegt, so dass ein sich in Gurtbandverlaufsrichtung erstreckender, enger Spalt zwischen dem Verengungsabschnitt 18 des Bügels 14 und der Anlagefläche 19 entsteht. Die Höhe des Spaltes ist geringer als die Dicke des Gurtbandes 5, so dass die Beweglichkeit des Gurtbandes 5 gehemmt ist. Zudem werden durch die Anlagefläche 19 und den Bügel 14 Umlenkstellen 10 für das Gurtband 5 ausgebildet, so dass das Gurtband 5 in unterschiedliche Richtungen vor und hinter dem Spalt umgelenkt wird.

Die Ausführungsformen der Schlosszunge 1 unterscheiden sich in der körperlichen Ausgestaltung des Umlenkelements 6, des Zungenkörpers 3 und der daraus resultierenden unterschiedlichen Ausgestaltung der weiteren Umlenkstellen 10.

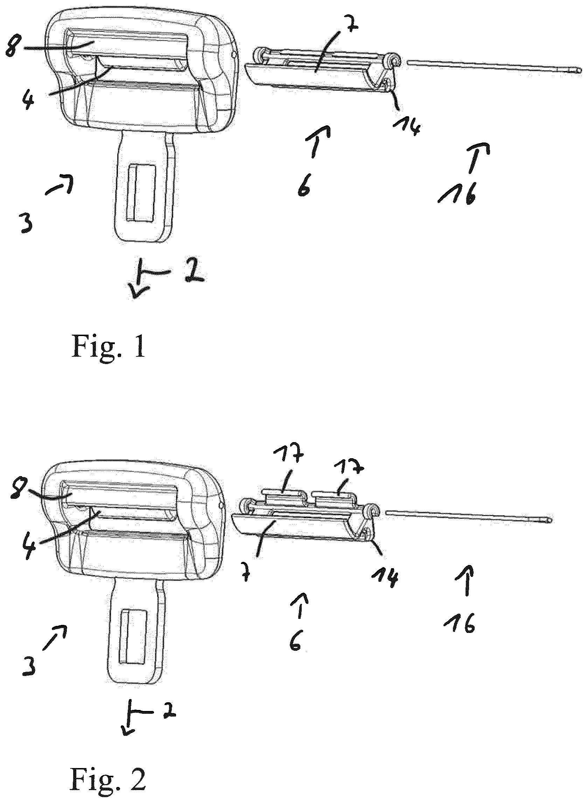

So werden gemäß der Ausführungsform der Fig. 1, 3 und 4 die Umlenkstellen 10 in der Belastungsstellung (siehe Fig. 4) von dem Umlenkelement 6 und dem Zungenkörper 3 ausgebildet. Sowohl eine erste Umlenkstelle 12 als auch eine im Gurtbandverlauf letzte Umlenkstelle 15 werden jeweils von dem Umlenkelement 6 ausgebildet. Die mittleren Umlenkstelle13 werden hingegen von der Zusammenwirkung des Zungenkörpers 3 mit dem Bügel 14 ausgebildet. Das Gurtband 5 wird somit durch die von der Anlagefläche 19 des Zungenkörpers 3 und dem Verengungsabschnitt 18 des Bügels 14 gebildete Schikane geführt und ist vor und hinter der Schikane in unterschiedliche Richtungen gekrümmt.

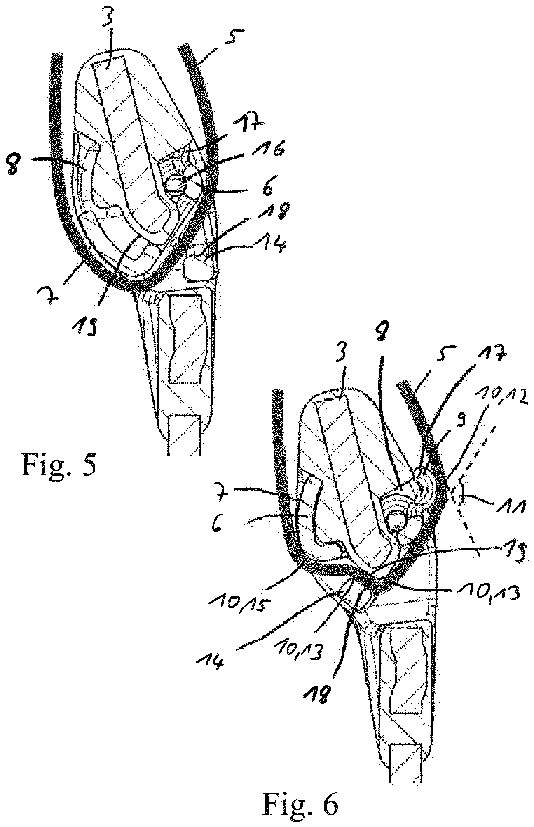

Die zweite Ausführungsform der Fig. 2, 5 und 6 weist einen aus mehreren Abschnitten bestehenden zweiten Schenkel 17 mit einem Endbereich 9 auf. In der Durchlaufstellung ist der Endbereich 9 des Umlenkelements 6 in einer entsprechenden Ausnehmung 8 in dem Zungenkörper 3 angeordnet (siehe Fig. 5), so dass das Gurtband 5 in der Durchlaufstellung nicht in Kontakt mit dem Endbereich 9 kommt. Wird nun eine Zugkraft in das Gurtband 5 eingeleitet, so schwenkt das Umlenkelement 6 mit dem zweiten Schenkel 17 aus der Ausnehmung 8 hinaus, wobei der ausgeschwenkte Endbereich 9 des Umlenkelements 6 eine Umlenkstelle 10 für das Gurtband 5 ausbildet (siehe Fig. 6).

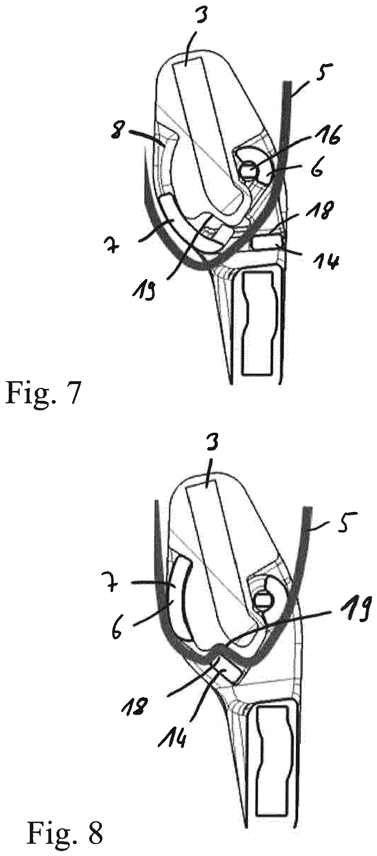

Das in den Figuren 7 und 8 dargestellte Ausführungsbeispiel unterscheidet sich von den vorherigen Ausführungsbeispielen darin, dass das Umlenkelement 6 und der Zungenkörper 3 so geformt sind, dass in der Belastungsstellung das Gurtband 5 in dem Gurtbandabschnitt, der sowohl mit dem Verengungsabschnitt 18 des Bügels 14 als auch mit der Anlagefläche 19 des Zungenkörpers 3 in Anlage ist, von dem Zungenkörper 3 und dem Bügel 14 umgelenkt wird. Insofern ist eine weitere Schikane ausgebildet, die das Gurtband 5 an der Bewegung durch den Spalt zwischen Bügel 14 und Zungenkörper 3 hemmt.

Alle Ausführungsformen haben auch gemeinsam, dass das Gurtband 5 an den Umlenkstellen 10 jeweils unter einer relativ großen Haftreibung an dem Umlenkelement 6 oder dem Zungenkörper 3 anliegt, wobei das Gurtband 5 zwischen zumindest zwei Umlenkstellen 10 gar nicht oder nur mit geringerer Haftreibung an der Schlosszunge 1 anliegt. Aufgrund des relativ geringen Krümmungsradius an den Umlenkstellen 10 und der gegebenenfalls durch geeignete Materialwahl erhöhten Haftreibung an den Umlenkstellen 10 ist in Kombination mit der durch den Bügel 14 und dem Zungenkörper 3 gebildeten Schikane sichergestellt, dass das Gurtband 5 in der Belastungsstellung auch bei hohen Kräften sicher in seine Bewegung gehemmt wird, so dass der Brustabschnitt des Gurtbandes 5 von dem Beckenabschnitt des Gurtbandes 5 entkoppelt ist.

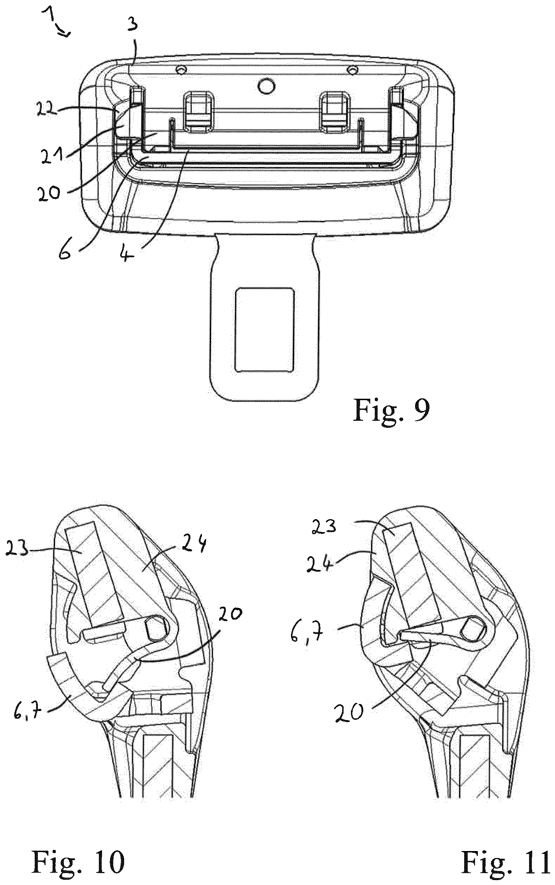

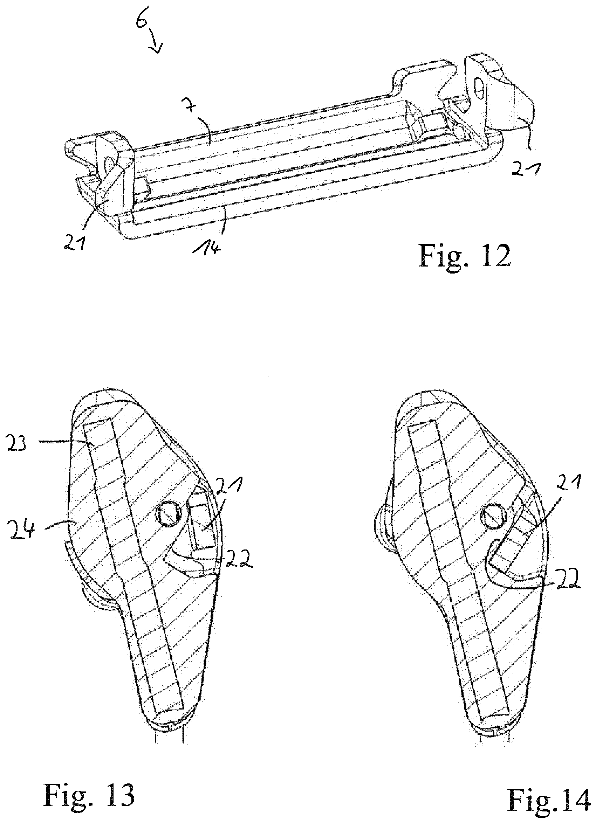

Die in Figur 9 dargestellte vierte Ausführungsform einer Schlosszunge 1 weist das in Figur 12 dargestellte Umlenkelement 6 auf, welches einen ersten Schenkel 7 und einen Bügel 14 entsprechend den zuvor beschriebenen Ausführungsformen aufweist. Im Folgenden wird daher hauptsächlich auf die Unterschiede zu den zuvor beschriebenen Ausführungsformen eingegangen.

So sind an einer eine Platine 23 zumindest teilweise umgebenden Umspritzung 24 Federelemente in Form von Ärmchen 20 ausgebildet. Die Ärmchen 20 sind einteilig mit der Umspritzung 24 ausgebildet und mit dem Umlenkelement 6 in Anlage (siehe Figuren 10 und 11). Die Ärmchen 20 sind so gestaltet, dass sie das Umlenkelement 6 in die in Figur 10 dargestellte Durchlaufstellung vorspannen. Wird über das Gurtband eine Kraft in die Schlosszunge 1 eingeleitet, so werden die Ärmchen 20 von dem Umlenkelement 6 entgegen ihrer Federkraft ausgelenkt (siehe Figur 11).
Das Umlenkelement 6 umfasst zudem seitlich auskragende Anschlagselemente 21, die in einer Vertiefung in der Umspritzung 24 angeordnet sind, wobei von der Umspritzung 24 Gegenanschlagsflächen 22 ausgebildet werden (siehe Figur 9 in Kombination mit Figuren 13 und 14).

In der in Figur 14 dargestellten Belastungsstellung gelangt das Anschlagselement 21 in Anlage mit der Gegenanschlagsfläche 22, wobei gegebenenfalls durch die Form der Vertiefung in der Umspritzung 24 eine Selbsthemmung des Umlenkelements 6 eintreten kann. Die Gegenanschlagsfläche 22 ist zumindest so angeordnet, dass die Krafteinleitung in der Nähe der Platine 23 erfolgt.

### Bezugszeichenliste

- 1: Schlosszunge
- 2: Einsteckrichtung
- 3: Zungenkörper
- 4: Gurtschlitz
- 5: Gurtband
- 6: Umlenkelement
- 7: erster Schenkel
- 8: Ausnehmung
- 9: Endbereich
- 10: Umlenkstelle
- 11: Umlenkungswinkel
- 12: erste Umlenkstelle
- 13: mittlere Umlenkstelle
- 14: Bügel
- 15: letzte Umlenkstelle
- 16: Achse
- 17: zweiter Schenkel
- 18: Verengungsabschnitt
- 19: Anlagefläche
- 20: Ärmchen
- 21: Anschlagselement
- 22: Gegenanschlagsfläche
- 23: Platine
- 24: Umspritzung

## Patentansprüche

1. Schlosszunge (1) mit einem sich in eine Einsteckrichtung (2) erstreckenden Zungenkörper (3), in dem ein Gurtschlitz (4) zur Durchführung eines Gurtbandes (5) ausgebildet ist, und einem beweglich in dem Zungenkörper (3) angeordneten Umlenkelement (6), wobei das Gurtband (5) in einer unbelasteten Durchlaufstellung des Umlenkelements (6) durch den Gurtschlitz (4) beweglich ist und in einer durch eine in das Gurtband (5) eingeleitete Zugkraft herbeigeführten Belastungsstellung des Umlenkelements (6) mittels des Umlenkelements (6) in seiner Beweglichkeit zumindest gehemmt ist, wobei das Umlenkelement (6) von der Durchlaufstellung in die Belastungsstellung mit einem Verengungsabschnitt (18) entlang einer Anlagefläche (19) des Zungenkörpers (3) bewegbar ist, so dass das Gurtband (5) in der Belastungsstellung mit einem Gurtbandabschnitt sowohl mit der Anlagefläche (19) des Zungenkörpers (3) als auch mit dem Verengungsabschnitt (18) des Umlenkelements (6) flächig in Anlage ist, **dadurch gekennzeichnet, dass** zumindest in der Belastungsstellung der Zungenkörper (3) mit einem die Anlagefläche (19) aufweisenden Bereich durch zumindest einen Abschnitt des Umlenkelements (6) hindurchgreift.

2. Schlosszunge (1) nach Anspruch 1, wobei das Umlenkelement (6) schwenkbar um eine Schwenkachse (16) an dem Zungenkörper (3) gelagert ist.

3. Schlosszunge (1) nach Anspruch 1 oder 2, wobei das Umlenkelement (6) einen ersten Schenkel (7) aufweist, der von dem Gurtband (5) aus der Durchlaufstellung in die Belastungsstellung unmittelbar ausgelenkt wird, wobei das Umlenkelement (6) einen Bügel (14) aufweist, der das Gurtband (5) übergreift und den Verengungsabschnitt (18) ausbildet.

4. Schlosszunge (1) nach einem der vorhergehenden Ansprüche, wobei der Verengungsabschnitt (18) und die Anlagefläche (19) so geformt sind, dass das Gurtband (5) in dem Gurtbandabschnitt in der Längserstreckungsrichtung des Gurtbandes (5) durch die Anlagefläche (19) und den Verengungsabschnitt (18) umgelenkt wird.

5. Schlosszunge (1) nach einem der vorhergehenden Ansprüche, wobei das Umlenkelement (6) und/oder der Zungenkörper (3) so geformt sind, dass in der Belastungsstellung mindestens drei Umlenkstellen (10) für das Gurtband (5) von der Schlosszunge (1) ausgebildet werden, wobei in der Belastungsstellung aufgrund des von der Durchlaufstellung in die Belastungsstellung bewegten Umlenkelements (6) mehr Umlenkstellen (10) ausgebildet sind als für das in der Durchlaufstellung schlaufenförmig umgelenkte Gurtband (5).

6. Schlosszunge (1) nach einem der vorliegenden Ansprüche, wobei das Umlenkelement (6) und/oder der Zungenkörper (3) so geformt und das Umlenkelement (6) in der Belastungsstellung so ausgelenkt ist, dass in der Belastungsstellung das Gurtband (5) zwischen zwei Umlenkstellen (10) beabstandet zu der Schlosszunge (1) verläuft oder im Vergleich zu der Haftreibung der Umlenkstellen (10) mit geringerer Haftreibung an der Schlosszunge (1) anliegt.

7. Schlosszunge (1) nach einem der Ansprüche 5 oder 6, wobei mindestens die im Gurtbandverlauf erste Umlenkstelle (12) und letzte Umlenkstelle (15) von dem Umlenkelement (6) ausgebildet sind und die weiteren Umlenkstellen (13) in Gurtbandverlaufsrichtung zwischen der ersten Umlenkstelle (12) und der letzten Umlenkstelle (15) ausgebildet sind.

8. Schlosszunge (1) nach Anspruch 7, wobei mittlere Umlenkstellen (13) zum einen im Bereich der Anlagefläche (19) von dem Zungenkörper (3) und zum anderen von dem in der Belastungsstellung der Anlagefläche (19) gegenüberliegenden Verengungsabschnitt (18) des Umlenkelements (6) gebildet werden.

9. Schlosszunge (1) nach einem der vorhergehenden Ansprüche, wobei die Schlosszunge (1) im Bereich der von ihr ausgebildeten Umlenkstellen (10) aus einem Material geformt ist, das einen relativ hohen Reibungskoeffizienten aufweist.

10. Schlosszunge (1) nach einem der vorhergehenden Ansprüche, wobei das Umlenkelement (6) einen Schenkel (7) mit einem reibungserhöhenden Material an einem Endbereich (9) des Schenkels (7) ausbildet, wobei der Endbereich (9) des Schenkels (7) in der Durchlaufstellung in mindestens einer Ausnehmung (8) des Zungenkörpers (3) angeordnet ist und in der Belastungsstellung aus der Ausnehmung (8) des Zungenkörpers (3) herausbewegt ist, so dass der Endbereich (9) mit dem reibungserhöhenden Material in Anlage mit dem Gurtband (5) ist und eine Umlenkstelle (10) für das Gurtband (5) ausbildet.

11. Schlosszunge (1) nach einem der vorhergehenden Ansprüche, **dadurch gekennzeichnet, dass** das Umlenkelement (6) mittels wenigstens eines Federelements in die Durchlaufstellung vorgespannt ist.

12. Schlosszunge (1) nach Anspruch 11, wobei das wenigstens eine Federelement durch wenigstens ein einteilig mit dem Zungenkörper (3) ausgebildetes Ärmchen (20) gebildet ist.

13. Schlosszunge (1) nach einem der vorhergehenden Ansprüche, **dadurch gekennzeichnet, dass** an dem Umlenkelement (6) nach außen auskragende Anschlagselemente (21) ausgebildet sind, die in der Belastungsstellung in Anlage mit Gegenanschlagsflächen (22) an dem Zungenkörper (3) sind, wobei die Gegenanschlagsflächen (22) seitlich von dem Gurtschlitz (4) angeordnet sind.

14. Schlosszunge (1) nach Anspruch 13, wobei das Umlenkelement (6) einen ersten Schenkel (7) aufweist, der von dem Gurtband (5) aus der Durchlaufstellung in die Belastungsstellung unmittelbar ausgelenkt wird und wobei die Anschlagselemente (21) zumindest in der Durchlaufstellung auf einer dem ersten Schenkel (7) abgewandten Seite des Zungenkörpers (3) angeordnet sind.

## Claims

1. Buckle tongue (1) comprising a tongue body (3) extending in an insertion direction (2), in which body a belt slot (4) for guiding through a belt strap (5) is formed, and comprising a deflection element (6) movably arranged in the tongue body (3), it being possible to move the belt strap (5) through the belt slot (4) when the deflection element (6) is in an unloaded passage position and the belt strap being at least restricted in terms of its mobility by means of the deflection element (6) when the deflection element (6) is in a loading position brought about by a tensile force introduced into the belt strap (5), it being possible to move a constriction portion (18) of the deflection element (6) from the passage position into the loading position along a contact surface (19) of the tongue body (3) such that, in the loading position, a belt strap portion of the belt strap (5) is flat in contact with the contact surface (19) of the tongue body (3) and with the constriction portion (18) of the deflection element (6), **characterized in that**, at least in the loading position, a region of the tongue body (3) that comprises the contact surface (19) engages through at least one portion of the deflection element (6).

2. Buckle tongue (1) according to claim 1, wherein the deflection element (6) is mounted on the tongue body (3) so as to be able to pivot about a pivot axis (16).

3. Buckle tongue (1) according to either claim 1 or claim 2, wherein the deflection element (6) has a first leg (7) which is directly deflected by the belt strap (5) out of the passage position into the loading position, wherein the deflection element (6) has a bracket (14) which overlaps the belt strap (5) and forms the constriction portion (18).

4. Buckle tongue (1) according to any of the preceding claims, wherein the constriction portion (18) and the contact surface (19) are shaped such that the belt strap (5) in the belt strap portion is deflected in the longitudinal extension direction of the belt strap (5) by the contact surface (19) and the constriction portion (18).

5. Buckle tongue (1) according to any of the preceding claims, wherein the deflection element (6) and/or the tongue body (3) are shaped such that, in the loading position, at least three deflection points (10) for the belt strap (5) are formed by the buckle tongue (1), wherein, in the loading position, more deflection points (10) are formed as a result of the deflection element (6) moved from the passage position into the loading position than for the belt strap (5) deflected in the manner of a loop in the passage position.

6. Buckle tongue (1) according to any of the preceding claims, wherein the deflection element (6) and/or the tongue body (3) are shaped and the deflection element (6) is deflected in the loading position such that, in the loading position, the belt strap (5) extends between two deflection points (10) so as to be spaced apart from the buckle tongue (1) or abuts the buckle tongue (1) at a lower static friction by comparison with the static friction of the deflection points (10).

7. Buckle tongue (1) according to either claim 5 or claim 6, wherein at least the first deflection point (12) and last deflection point (15) in the belt strap course are formed by the deflection element (6) and the further deflection points (13) are formed in the belt strap course direction between the first deflection point (12) and the last deflection point (15).

8. Buckle tongue (1) according to claim 7, wherein middle deflection points (13) are formed by the tongue body (3) in the region of the contact surface (19) and by the constriction portion (18) of the deflection element (6) that is opposite the contact surface (19) in the loading position.

9. Buckle tongue (1) according to any of the preceding claims, wherein the buckle tongue (1), in the region of the deflection points (10) formed thereby, is shaped from a material having a relatively high friction coefficient.

10. Buckle tongue (1) according to any of the preceding claims, wherein the deflection element (6) forms a leg (7) comprising a friction-increasing material at an end region (9) of the leg (7), wherein the end region (9) of the leg (7), in the passage position, is arranged in at least one recess (8) in the tongue body (3) and, in the loading position, is moved out of the recess (8) in the tongue body (3) such that the end region (9) comprising the friction-increasing material is in contact with the belt strap (5) and forms a deflection point (10) for the belt strap (5).

11. Buckle tongue (1) according to any of the preceding claims, **characterized in that** the deflection element (6) is pre-loaded into the passage position by at least one spring element.

12. Buckle tongue (1) according to claim 11, wherein the at least one spring element is formed by at least one arm (20) which is integrally formed with the tongue body (3).

13. Buckle tongue (1) according to any of the preceding claims, **characterized in that** outwardly projecting stop elements (21) are formed on the deflection element (6), which elements are, in the loading position, in contact with counter stop surfaces (22) on the tongue body (3), the counter stop surfaces (22) being arranged laterally relative to the belt slot (4).

14. Buckle tongue (1) according to claim 13, wherein the deflection element (6) has a first leg (7) which is directly deflected by the belt strap (5) out of the passage position into the loading position and wherein the stop elements (21) are arranged, at least in the passage position, on a side of the tongue body (3) that faces away from the first leg (7).

## Revendications

1. Languette de verrouillage (1) comportant un corps de languette (3) s'étendant dans une direction d'insertion (2), corps de languette dans lequel est ménagée une fente de ceinture (4) servant au passage d'une sangle de ceinture (5), et un élément de renvoi (6) disposé de manière amovible dans le corps de languette (3), la sangle de ceinture (5) pouvant passer par la fente de ceinture (4) dans une position de passage non sollicitée de l'élément de renvoi (6) et son déplacement étant au moins bloqué au moyen de l'élément de renvoi (6) dans une position de sollicitation de l'élément de renvoi (6) provoquée par une force de traction introduite dans la sangle de ceinture (5), l'élément de renvoi (6) pouvant être déplacé de la position de passage à la position de sollicitation par une section de rétrécissement (18) le long d'une surface d'appui (19) du corps de languette (3) de sorte que la sangle (5) est en appui à plat dans la position de sollicitation par une section de sangle de ceinture à la fois avec la surface d'appui (19) du corps de languette (3) et avec la section de rétrécissement (18) de l'élément de renvoi (6), **caractérisée en ce que** le corps de languette s'engage au moins dans la position de sollicitation avec une région présentant la surface d'appui (19) en passant par au moins une partie de l'élément de renvoi (6).

2. Languette de verrouillage (1) selon la revendication 1, dans laquelle l'élément de renvoi (6) est monté de manière pivotante autour d'un axe de pivotement (16) sur le corps de languette (3).

3. Languette de verrouillage (1) selon la revendication 1 ou 2, dans laquelle l'élément de renvoi (6) présente une première patte (7) qui est déviée directement par la sangle de ceinture (5) de la position de passage à la position de sollicitation, l'élément de renvoi (6) présentant une courroie (14) qui met en prise la sangle de ceinture (5) et forme la section de rétrécissement (18).

4. Languette de verrouillage (1) selon l'une des revendications précédentes, dans laquelle la section de rétrécissement (18) et la surface d'appui (19) sont formées de sorte que la sangle de ceinture (5) est déviée dans la section de sangle de ceinture dans la direction d'extension longitudinale de la sangle de ceinture (5) à travers la surface d'appui (19) et la section de rétrécissement (18).

5. Languette de verrouillage (1) selon l'une des revendications précédentes, dans laquelle l'élément de renvoi (6) et/ou le corps de languette (3) sont formés de sorte que, dans la position de sollicitation, au moins trois points de renvoi (10) sont formés par la languette de verrouillage (1) pour la sangle de ceinture (5), davantage de points de renvoi (10) étant formés dans la position de sollicitation que pour la sangle de ceinture (5) déviée en forme de boucle dans la position de passage en raison de l'élément de renvoi (6) déplacé de la position de passage à la position de sollicitation.

6. Languette de verrouillage (1) selon l'une des revendications précédentes, dans laquelle l'élément de renvoi (6) et/ou le corps de languette (3) sont formés et l'élément de renvoi (6) est renvoyé dans la position de sollicitation de sorte que, dans la position de sollicitation, la sangle de ceinture (5) circule entre deux points de renvoi (10) espacés de la languette de verrouillage (1) ou repose sur la languette de verrouillage avec un frottement statique moindre en comparaison au frottement statique des points de renvoi (10) .

7. Languette de verrouillage (1) selon l'une des revendications 5 ou 6, dans laquelle au moins le premier point de renvoi (12) et le dernier point de renvoi (15) selon la circulation de la sangle de ceinture sont formés par l'élément de renvoi (6) et les autres points de renvoi (13) sont formés dans le sens de circulation de la sangle de ceinture entre le premier point de renvoi (12) et le dernier point de renvoi (15).

8. Languette de verrouillage (1) selon la revendication 7, dans laquelle les points de renvoi centraux (13) sont formés d'une part dans la région de la surface d'appui (19) par le corps de languette (3) et d'autre part par la section de rétrécissement (18) de l'élément de renvoi (6) opposée dans la position de sollicitation de la surface d'appui (19).

9. Languette de verrouillage (1) selon l'une des revendications précédentes, dans laquelle la languette de verrouillage (1) située dans la région des points de renvoi (10) formés par celle-ci est formée à partir d'un matériau présentant un coefficient de frottement relativement élevé.

10. Languette de verrouillage (1) selon l'une des revendications précédentes, dans laquelle l'élément de renvoi (6) forme une patte (7) avec un matériau augmentant le frottement au niveau d'une région d'extrémité (9) de la patte, la région d'extrémité (9) de la patte (7) étant disposée dans la position de passage dans au moins un évidement (8) du corps de languette (3) et est déplacée dans la position de sollicitation hors de l'évidement (8) du corps de languette (3) de sorte que la région d'extrémité (9) avec le matériau augmentant le frottement est en appui avec la sangle de ceinture (5) et qu'un point de renvoi (10) est formé pour la sangle de ceinture (5).

11. Languette de verrouillage (1) selon l'une des revendications précédentes, **caractérisée en ce que** l'élément de renvoi (6) est précontraint au moyen d'au moins un élément de ressort dans la position de passage.

12. Languette de verrouillage (1) selon la revendication 11, dans laquelle l'au moins un élément de ressort est formé par au moins un bras (20) formé de manière monobloc avec le corps de languette (3).

13. Languette de verrouillage (1) selon l'une des revendications précédentes, **caractérisée en ce que** des éléments de butée (21) faisant saillie vers l'extérieur sont formés sur l'élément de renvoi (6), lesquels éléments sont en appui avec des surfaces de butée opposées (22) sur le corps de languette (3) dans la position de sollicitation, les surfaces de butée opposées (22) étant disposés latéralement par rapport à la fente de ceinture (4).

14. Languette de verrouillage (1) selon la revendication 13, dans laquelle l'élément de renvoi (6) présente une première patte (7) qui est déviée directement par la sangle de ceinture (5) de la position de passage à la position de sollicitation et dans laquelle les éléments de butée (21) sont disposés, au moins dans la position de passage, sur un côté opposé à la première patte (7) du corps de languette (3).
